Europäisches Patentamt

European Patent Office

Office européen des brevets

(11) Veröffentlichungsnummer: **0 451 546 A2**

## (12) EUROPÄISCHE PATENTANMELDUNG

(21) Anmeldenummer: **91104146.5**

(22) Anmeldetag: **09.05.88**

(51) Int. Cl.⁵: **F26B 3/08**

Diese Anmeldung is am 18 - 03 - 1991 als Teilanmeldung zu der unter INID-Kode 60 erwähnten Anmeldung eingereicht worden.

(43) Veröffentlichungstag der Anmeldung:
**16.10.91 Patentblatt 91/42**

(60) Veröffentlichungsnummer der früheren Anmeldung nach Art. 76 EPÜ: **0 371 971**

(84) Benannte Vertragsstaaten:
**AT BE CH DE FR GB IT LI LU NL SE**

(71) Anmelder: **BÜHLER AG**

**CH-9240 Uzwil(CH)**

(72) Erfinder: **Rosse, Roger**
**Brünigring 12**
**CH-6020 Emmenbrücke(CH)**

(74) Vertreter: **Büchel, Kurt F., Dr.**
**Bergstrasse 297**
**FL-9495 Triesen(LI)**

(54) **Behandlungsturm für pulver- oder granulatförmiges Material und Verfahren zu seinem Betreiben.**

(57) Ein Behandlungsturm für pulver- oder granulatförmiges Material weist eine obere Wirbel- bzw. Sprudelschichtkammer (1) und eine untere Kammer (2;3) auf. Die obere Kammer (1) besitzt einen Zulauf (15) und einen Auslauf (5) für das zu behandelnde Material, sowie pneumatische Mittel (7) zur Bewegung des Materials vom Zulauf (15) zum Auslauf (5). Diese pneumatischen Mittel (7) umfassen eine die obere Kammer (1) nach unten hin abdeckende Belüftungsfläche (6) mit Lochungen. Die untere Kammer (2;3) umfaßt einen zur Durchströmung des die Wirbel- bzw. Sprudelschicht fluidisierenden Gases bestimmten ersten Raum (2) und einen der Behandlung des Materials dienenden zweiten Raum (3), in den vorzugsweise der Auslauf (5) einmündet. Die obere Kammer (1) und die untere Kammer (2;3) sind über die Belüftungsfläche miteinander verbunden. Der Zulauf (15) ist in bezug auf eine durch die Mittelachse des Behandlungsturmes und den Auslauf gelegte Ebene versetzt.

Fig.1

Fig. 2

EP 0 451 546 A2

Die Erfindung betrifft einen Behandlungsturm für pulver- oder granulatförmiges Material nach dem Oberbegriff des Anspruches 1, sowie ein Verfahren zu seinem Betreiben.

Derartige Behandlungstürme werden in bekannter Weise zur stufenweisen Behandlung von Materialien eingesetzt. So beschreibt die US-PS-2.668.041 einen Behandlungsturm, der der Wärmebehandlung, insbesondere dem Kalzinieren von Kalkstein, dient. Dabei wird zerkleinertes Material in einem Wirbelbett von heißer Fluidisierungs-Luft durchströmt und der gewünschten Behandlung unterworfen. Das ausfließende Material wird in einem unteren Teil des Behandlungsturmes über gegengleiche, perforierte Kegelflächen geführt. Dort wird es von der Fluidisierungs-Luft durchströmt und abgekühlt, gleichzeitig wird die Fluidisierungs-Luft erhitzt.

Es ist bekannt, daß - beispielsweise - amorphe Polyestergranulate vor dem Aufschmelzen im Extruder möglichst gleichmäßig tief und sorgfältig getrocknet werden müssen, um die Beständigkeit und die gewünschten Eigenschaften von Polyesterfäden zu gewährleisten. Verschiedene Verfahren und Vorrichtungen erlauben, diese Trocknung durchzuführen. Diskontinuierliche Verfahren unter Verwendung von bekannten Taumeltrocknern haben den Nachteil, daß die Trocknungszeiten zwischen 10 bis 50 Stunden zu lang sind und sich die Eigenschaften des Granulats während der Zwischenlagerung nach dem Trocknen ändern können.

Kontinuierliche Verfahren wie Schachttrockner aller Art mit ruhender Schüttung haben den Nachteil, daß der Apparat den Temperaturverlauf des Granulats nicht beeinflussen kann. Aus der DE-A-25 58 730 ist ein kontinuierliches Verfahren und eine Vorrichtung zum Kristallisieren und Trocknen von Polyethylenterephthalat in einer Stufe bekannt. Bei dem Verfahren befindet sich das Granulat in relativer Ruhe. Es wird bewußt eine Agglomeration in Kauf genommen, die später wieder zerstört werden muß. Die Vorrichtung besteht aus eingebauten mechanischen Teilen, die zur Zerstörung von Agglomeraten dienen, die aber eine zusätzliche Staubbildung verursachen.

Das FR-Patent 2 355 863 betrifft ein Gerät zur kontinuierlichen Behandlung von Polyestergranulaten, bestehend aus einer Kristallisationszone, die auf dem Wirbelschichtprinzip beruht und einer Trocknungszone, die mehrere übereinander angeordnete Böden enthält. Jeder Boden besteht aus rotierenden Lamellen, die gemeinsam betätigt werden. Mit dieser Vorrichtung wird aber die Kristallisationszeit relativ lang, die Entstaubung des Polymers ist nicht zufriedenstellend, und schließlich enthält sie auch mechanische Teile, die zu einer komplizierten und teuren Anordnung führt.

Welche Behandlung aber auch verwirklicht werden soll, durch einen Behandlungsturm, bei dem die kennzeichnenden Merkmale des Anspruchs 1 verwirklicht sind, können die genannten Nachteile vermieden werden. Vorteilhafte Weiterbildungen und Betriebsmöglichkeiten sind in den Unteransprüchen und insbesondere in den Verfahrensansprüchen angegeben.

Die im oberen Teil des Behandlungsturmes vorgesehene Wirbelschicht- bzw. Sprudelschichtkammer ist in der zugehörigen Stammanmeldung Nr. 88903755.2 beschrieben, deren Inhalt hiermit als geoffenbart gilt.

Eine derartige Kammer ist aus der DE-PS 1 667 058 bekannt geworden. Wie in allen Sprudelschichtapparaten ist dabei eine Schrägfläche, und zwar in Form eines zentralen, ein Rohr umfassenden Konus, vorgesehen, die einen Bereich geringerer Strömungsgeschwindigkeit schaffen soll, um das in die Kammer eingebrachte Produkt dazu zu veranlassen, unter der Einwirkung des aufwärtsströmenden Fluids aufwärts zu sprudeln, jedoch in den Bereichen geringerer Strömungsgeschwindigkeit wieder abwärts zu sinken. Zweck dieser Maßnahme ist eine gute Durchmischung und damit eine gleichmäßige Behandlung des eingebrachten Gutes.

Die Vorteile einer bekannten Sprudelkammer werden für ihren Einsatz in dem erfindungsgemäßen Behandlungsturm beibehalten, eine solche Kammer jedoch so ausgestaltet, daß ein kontinuierlicher Betrieb möglich ist. Das geschieht einerseits dadurch, daß Zulauf und Auslauf in bzw. aus der Wirbelschicht- bzw. Sprudelschichtkammer, an beiden Seiten einer - insbesondere ringförmig ausgebildeten - diese Kammer trennenden Trennwand angeordnet sind, entsprechend Anspruch 4, oder andererseits dadurch, daß die Verteilung und/oder die Größe der Lochflächen der Belüftungsfläche der Wirbelschicht- bzw. Sprudelschichtkammer - entsprechend Anspruch 3 - in vorteilhafter Weise ausgebildet werden.

Unabhängig davon, ob die im oberen Teil des Behandlungsturms vorgesehene Wirbelschichtkammer als Sprudelschichtkammer ausgebildet ist (und daher die erwähnte Schrägfläche besitzt) ganz besonders aber im Zusammenhang mit dieser, ist es von Vorteil, wenn die Merkmale des Anspruches 3 verwirklicht sind. Dabei wird es herstellungsgemäß am einfachsten sein, wenn das Merkmal a) verwirklicht ist. Auch das Merkmal b) dient der Vereinfachung der Herstellung. Es hat sich gezeigt, daß eine Ausbildung nach Merkmal c) besonders günstig ist, wobei die Verteilung der Lochflächen von der Zufuhrvorrichtung zum Auslauf hin zweckmäßig entsprechend einer Zykloiden-Charakteristik erfolgt.

Zwar wurde bereits in der US-PS 3 360 876 vorgeschlagen, den Transport durch eine Druckdifferenz zwischen einzelnen Kammern eines Wirbelbettes vorzunehmen, d.h. es sollte das eingebrachte Produkt durch eine Energiedifferenz zwischen den einzelnen Kammern weiterbefördert werden. Nun ist der Aufwand zur Erzielung und Einhaltung einer vorgestimmten Druckdifferenz relativ groß, da mehrere, voneinander an sich getrennte Kammern vorzusehen sind, denen jeweils gesonderte Ventile und Regelschaltungen zuzuordnen sind. Darüber hinaus fällt der Druck selbstverständlich gerade in der ersten Kammer dann ab, wenn Material zugeführt werden soll, so daß der Betrieb hier nicht völlig gleichmäßig erfolgen kann, mithin nur "quasi-kontinuierlich" ist.

Ist der Behandlungsturm entsprechend den Merkmalen des Anspruchs 6 ausgebildet, so werden, da der erste Raum der unteren Kammer den zweiten Raum der unteren Kammer ringförmig umgibt, isotherme Bedingungen im Inneren des inneren, beispielsweise als Trockner dienenden, zweiten Raums gewährleistet.

Unter Verwendung eines solchen Behandlungsturmes kann ein Verfahren mit den Merkmalen des Anspruches 7 verwirklicht werden, das nun eine kostengünstige und zuverlässige Reproduzierbarkeit der Trocknung erlaubt. Das erfindungsgemäße Verfahren hat sich besonders zur Trocknung von Polyester als geeignet erwiesen.

Unter Polyester versteht man in der vorliegenden Beschreibung lineare polykondensierte Ester, hergestellt durch die Reaktion eines oder mehrerer Diole der Serie $HO-(CH_2)_n-OH$ mit $1 \leq n \leq 10$ mit einer Dicarbonsäure, vorzugsweise Terephthalsäure, oder einem entsprechenden Diester wie Dimethylterephthalat. Die Polyester können auch mit organischen oder anorganischen Zusätzen modifiziert sein.

Es ist überraschend, daß die Kristallisation in weniger als 3 Minuten erfolgt. Durch diese kurze Verweilzeit kann keine Hydrolyse erfolgen. Das bedeutet eine mehr als zehnmal raschere Kristallisationszeit gegenüber der bekannten Technik. Hierdurch können kleinere Apparaturen für den gleichen Massedurchsatz verwendet werden, wodurch eine wirtschaftlichere und materialsparende Herstellung von Polyester erzielt wird.

Es ist auch zweckmäßig, mit vorgetrockneter Luft oder einem Inertgas die Sprudelschicht zu erzeugen. Hierbei ist es vorteilhaft, mit hoher Geschwindigkeit strömende heiße Gase über eine Ringscheibe zu führen und in den Sprudelraum zu führen, wobei es zweckmäßig ist, das Heißgas über den Heizmantel des Trockners zu führen.

Zur Kristallisation in der Sprudelschicht bringen Temperaturen von 150 - 180° C, die besten Resultate.

In der Schüttung erfolgt die Trocknung vorteilhaft unter isothermen Bedingungen bei ca. 150 bis 180° C und konstanter Feuchtigkeit. Die Wahl der Temperatur ist abhängig von der Art des zu trocknenden Granulats, wie dessen Form und Größe, von dessen Durchsatz, von dessen Endfeuchte usw. Die isotherme Trocknung hat den Vorteil, daß ein gleichmäßig getrocknetes Granulat für das anschließende Aufschmelzen bereit steht.

Eine Niveauregulierung des Granulats im Trocknerteil, beispielsweise mit einer Sonde, erlaubt, je nach Granulatdurchsatz, durch geeignete Wahl der Höhe der Granulatschüttung die Aufenthalts- bzw. Trocknungszeit des Granulats konstant zu halten. Dazu wird die Drehzahl der Dosiereinrichtung über das Niveau des Granulats so geregelt, daß sich ein konstantes Granulatniveau ergibt.

Die Verwendung des oben beschriebenen Behandlungsturmes führt dazu, daß frisch zugeführtes Produkt sofort erfaßt und nach oben gerissen wird, wodurch Agglomerate verhindert werden. Gerade dann, wenn eine Wirbelschichtkammer mit den Merkmalen a) des Anspruches 3 verwendet wird, ist auch die Wärmezufuhr, beispielsweise im Falle von Polyester, zufuhrseitig möglichst intensiv, damit ein Verkleben zwischen 80° C und 120° C nicht eintreten kann. Im Falle des Behandlungsturmes ist es zweckmäßig, für den Auslaufkonus einen Neigungswinkel von 40 bis 60 Grad zu wählen.

Weitere Einzelheiten der Erfindung ergeben sich anhand der nachfolgenden Beschreibung von in der Zeichnung schematisch dargestellten Ausführungsbeispielen. Es zeigen:

Fig.1    einen Längsschnitt durch einen erfindungsgemäßen Behandlungsturm;

Fig.2    einen Schnitt nach der Linie II-II der Fig. 1, der den Siebboden der Sprudelschichtkammer in Draufsicht zeigt;

Fig.3    eine weitere Ausführungsform mit einer der Fig.2 analogen Lochverteilung, jedoch in einer Wirbelschichtkammer ohne Sprudelwirkung.

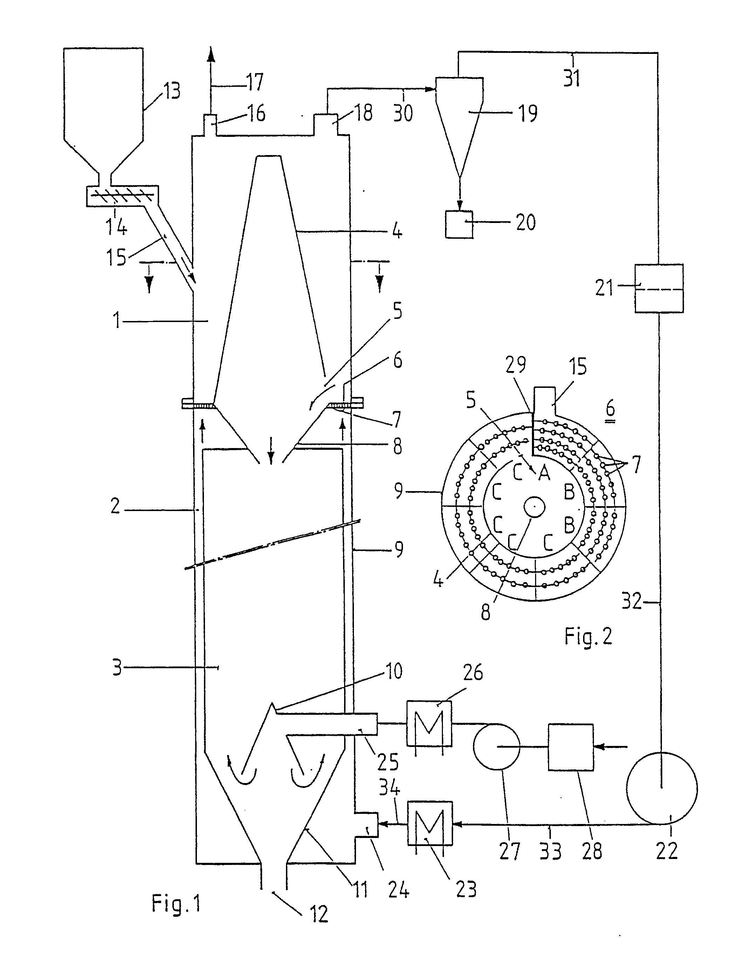

Gemäß Fig.1 besteht die erfindungsgemäße Vorrichtung aus einem Sprudelschichtraum als Kristallerteil und einem ringförmigen Raum 2, welche zusammen mit dem Raum 3 den Trocknerteil bildet. Im Sprudelschichtraum 1 ist ein Verdrängungskörper 4 vorgesehen, welcher einen Auslauf 5 in seinem Sockel aufweist. Der Verdrängungskörper 4 schließt den Innendurchmesser einer Belüftungsfläche 6. Die Belüftungsfläche 6 weist pneumatische Mittel 7 mit unterschiedlicher Anzahl in den einzelnen Segmenten, jedoch gleichem Durchmesser auf. Auf der Unterseite der Belüftungsfläche 6 ist ein Einlauftrichter 8 vorgesehen, welcher in den Raum 2 führt, in deren unterem Teil ein Konus 11 mit einer Austrittsöffnung 12 für das trockene Produkt vorgesehen ist.

Der Kristallerteil, welcher auch als Aufheizteil bezeichnet werden kann, und der Trocknerteil sind von einem zylindrischen Mantel umgeben, der vorzugsweise aus einem Rohr besteht. Zur Verteilung der Luft ist in dem Raum 3 ein Kegel 10 vorgesehen, der mit einem Eintrittsstutzen 25 für Frischgas verbunden ist. Ein Vorlagesilo 13 ist über ein Dosiergerät 14 mit einem Eintrittsstutzen 15 verbunden, welcher in die Sprudelschichtkammer 1 mündet. Im Kopf des Kristallers ist ein Austrittsstutzen 16 und ein Abluftkamin 17 vorgesehen.

Ein weiterer Stutzen 18 führt über eine Leitung 30 auf einen Zyklon 19 und einen Behälter 20. Der Zyklon 19 führt über eine Leitung 31 auf einen Filter 21 und von hier über eine Leitung 32 auf einen Ventilator 22. Vom Ventilator 22 geht eine Leitung 33 zum Gaserhitzer 23, von welchem eine Leitung 34 auf den Stutzen 24 führt. Zur Frischgaszufuhr über den Stutzen 25 ist ein Erhitzer 26, ein Ventilator 27 und eine Konditionierungseinrichtung 28 vorgesehen.

In Fig.2 ist die Anordnung und Verteilung der Bohrungen 7 in der Belüftungsfläche 6 gezeigt.

Im Bereich des Eintrittsstutzens 15 und des Verdrängungskörpers 4 ist eine Trennwand 29 vorgesehen, welche die Sprudelschichtkammer 1 abteilt. Die Anzahl der Bohrungen nimmt vom Sektor im Bereich des Eintrittsstutzens 15 zum Auslauf 5 ab.

Prinzipiell könnte die Größe der Lochfläche vom Zufuhrstutzen 15 bis zum Auslauf 5 hin mehr oder minder stetig abnehmen, doch ist es für die Herstellung günstiger, wenn dies in Stufen erfolgt, so daß in einem dem Zufuhrstutzen benachbarten Sektor A die Lochfläche (im Vergleich zu den anderen Sektoren) am größten ist, anschließend in den Sektoren B kleiner und noch kleiner in den Sektoren C. Dadurch wird ein Verlauf erreicht, der annähernd Zykloiden-Charakteristik besitzt, wobei das in der Behandlungskammer 1 befindliche Produkt in Sektor A soviel Energie zugeführt erhält, daß sich sein Fortbewegungsimpuls bis über den zweiten Sektor B hinaus noch fortsetzt, doch erhält das Material im Bereiche des Überganges vom zweiten Sektor B zum ersten Sektor C einen weiteren Bewegungsimpuls durch den so geschaffenen Energiegradienten, der eine gleichmäßige Fortbewegung bis zum Auslauf 5 sichert. Dabei ist die Herstellung besonders einfach und mit einen einzigen Typ von Stanzwerkzeugen möglich, wenn die Lochungen der pneumatischen Mittel 7 untereinander jeweils gleich groß sind.

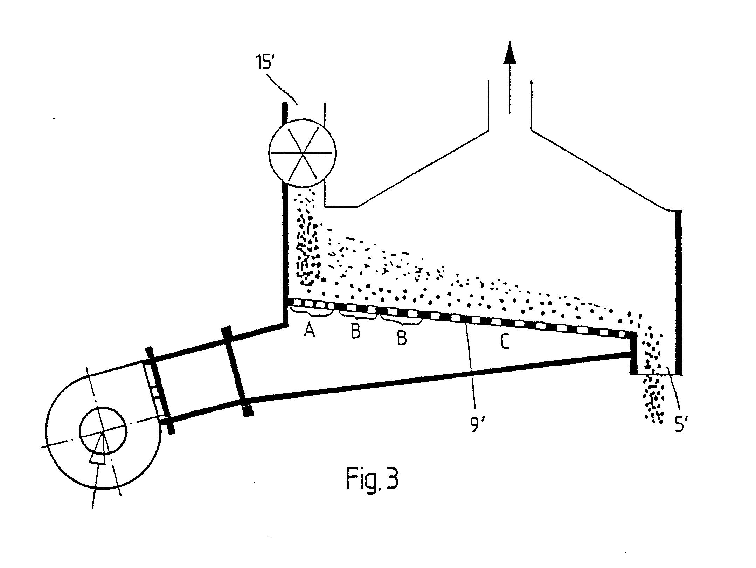

Wie aus Fig.3 ersichtlich, läßt sich dieses Prinzip des Materialtransportes auch an herkömmlichen Wirbelschichtkammern verwirklichen, wobei sich im Bereiche des Sektors A eine relativ große Schichthöhe ergibt, die gegen die Sektoren B hin abnimmt, worauf sich eine Verminderung der Schichthöhe bis zum Auslauf 5'ergeben wird, so daß insgesamt ein Gefälle vom Zufuhrstutzen 15'bis zum Auslauf 5'entsteht. Dieses Gefälle kann noch in herkömmlicher Weise dadurch unterstützt werden, daß der Siebboden 9'selbst ebenfalls abfallend angeordnet wird.

Anstelle der abnehmenden Anzahl der Öffnungen gleicher Durchmesser, können aber auch die Durchmesser der Oeffnungen in Richtung vom Stutzen 15 zum Auslauf 5 bei gleicher Anzahl von Bohrungen abnehmen. Wesentlich ist, daß dem eintretenden Granulat zu Beginn eine möglichst große Menge an Heißluft entgegengeführt wird.

Im Betrieb der Vorrichtung wird beispielsweise feuchtes, amorphes Polyestergranulat aus Polyethylenterephthalat aus dem Silo 13 über die Dosiereinrichtung 14 kontinuierlich über den Eintrittsstutzen 15 in den Sprudelschichtraum 1 dosiert. Ein Gasstrom aus konditionierter Luf bzw. Umluft strömt in einer Menge von 5 bis 50kg/Stunde Luft je kg Granulatdurchsatz/Stunde unter gleichem Druck mit einer Temperatur von 150 - 180 °C, vorzugsweise bei ca. 170 °C, durch die pneumatischen Mittel 7 der Belüftungsfläche 6 in den Sprudelschichtraum 1 und erfaßt die eintretenden Granulate. Da die Gasmenge eine Fluidisierung des Granulats bewirkt und laufend neues Granulat eingetragen wird, entsteht ein Fluß des Granulats in Richtung Ausgang. Die im ersten Sektor spezifisch größere Luftmenge bewirkt aber auch eine intensive Entstaubung des Granulats und erwärmt es bis zum Austritt aus dem Sprudelschichtraum 1 auf die vorgegebene Trocknertemperatur. Die mittlere Verweilzeit im Kristaller beträgt nicht mehr als 3 Minuten, vorzugsweise 1 - 3 Minuten. Das kristallisierte Granulat fließt kontinuierlich durch die Oeffnung des Auslaufes 5 im Verdrängungskörper 4 durch den Einlauftrichter 8 in den Raum 3. In dem Raum 3 bewegt sich die Granulatschüttung unter isothermen Bedingungen und eventuell unter geringem Vakuum durch ihr Eigengewicht über den Konus 11 und durch den Austrittsstutzen 12 zur Weiterverarbeitung, beispielsweise zum Aufschmelzen im Extruder. Die Neigung des Verdrängungskörper ist an ein bestimmtes Produkt angepaßt und sollte für Polyester 50 bis 85 Grad aufweisen.

Zur Kristallisation des Granulats im Kristaller, bzw. im Aufheizteil, dient ein Luftstrom hoher Geschwindigkeit, der in der Regel aus entstaubter Umluft besteht, welche über das Filter 21, den Ventilator 22 in einem Erhitzer auf 150° - 180°C, vorzugsweise 170°C, erhitzt wird. Der Luftstrom oder ein inertes Gas durchströmt den ringförmigen Raum 2, welcher gleichzeitig als Mantel des Trockners dient und so die isothermen Bedingungen im Innern gewährleistet. Die Geschwindigkeit des Gases wird so gewählt, daß sich die Höhe der Sprudelschicht in etwa der mittleren Höhe des Verdrängungskörpers 4 einstellt. Damit wird gewährleistet, daß einerseits kein Granulat in den Austrittsstutzen 18 der Umluft gelangt und andererseits eine wirksame Entstaubung erreicht wird. Die Ueberschußluft wird über den Stutzen 16 und den Abluftkamin 17 abgeführt.

Der Hauptteil der heißen Abluft wird über die Leitung 30 einem Zyklonabscheider 19 zugeführt, von Staub und Abrieb befreit. Der Staub wird im Behälter 20 gesammelt und verworfen. Zur Sicherheit ist ein Feinfilter 21 dem Zyklon 19 nachgeschaltet.

Zur Trocknung mit Luft wird diese über eine handelsübliche Entfeuchtungs- und Konditionierungsanlage 28 für Frischluft geführt, über den Ventilator 27 verdichtet, im Erhitzer 26 auf Trocknungstemperatur von gleichfalls 150° - 180°C, vorzugsweise 170°C, gebracht und über den Eintrittsstutzen 25 und den Konus 10 im Trocknungsgut verteilt. Die Gasmenge beträgt 0,5 bis 2 kg Luft/Stunde je kg Granulatdurchsatz je Stunde. Nach Aufnahme von Feuchtigkeit tritt die Abluft mit geringer Strömungsgeschwindigkeit durch den Auslauf 5 dem kristallisierten Granulat entgegen, durchströmt die Sprudelschicht und verläßt zusammen mit der Sprudelluft den Kristaller über den Stutzen 18.

Ein wesentlicher Vorteil der Erfindung ist in ihrer einfachen, wirtschaftlichen Betriebsweise zur Erreichung einer gleichmäßigen Qualität zu sehen. Es findet eine vollständige Entstaubung des Granulats statt. In der nachfolgenden Schüttung des Trockners entsteht kein neuer Abrieb. Die Vorrichtung ist ohne mechanisch bewegbare Einrichtungen bevorzugt zur kontinuierlichen Trocknung von Polyestergranulat geeignet und wegen ihrer Einfachheit wirtschaftlich herzustellen.

Die Vorrichtung ist jedoch auch zur Trocknung für ein Kunststoffgranulat ohne vorhergehende Kristallisation geeignet. In diesem Fall dient der als Kristaller bezeichnete Teil lediglich zur Aufheizung des Granulats. Soll ein beliebiges Kunststoffgranulat auf eine vorgeschriebene Endfeuchte getrocknet werden, muß das Trocknungsgas auf eine entsprechende Gleichgewichtsfeuchte eingestellt werden.

Der nur wenige Minuten dauernde Aufenthalt des Granulates im Sprudelschichtraum verhindert Schädigungen durch Hydrolyse. Die intensive Querstromerwärmng des Granulats bis zum Austritt aus dem Sprudelschichtraum ermöglicht den Eintritt des Granulats mit Trocknertemperatur in den Einlauftrichter, womit gewährleistet ist, daß durch die isotherme Endtrocknung Schwankungen in der Endfeuchte durch einen nicht überblickbaren Temperaturverlauf vermieden werden.

Der erfindungsgemäße Behandlungsturm sowie das erfindungsgemäße Verfahren sind zur Trocknung von Kunststoffgranulaten aller Art besonders geeignet, insbesondere aber für Polyestergranulat. Weitere Anwendungen liegen vor allem im Nahrungsmittelbereich.

**Patentansprüche**

1. Behandlungsturm für pulver- oder granulatförmiges Material, mit einer oberen Wirbel- bzw. Sprudelschichtkammer (1), die einen Zulauf (15) und einen Auslauf (5) für das zu behandelnde Material, sowie pneumatische Mittel (7) zur Bewegung des Materials vom Zulauf (15) zum Auslauf (5) aufweist, welche Mittel (7) eine die obere Kammer (1) nach unten hin abdekkende Belüftungsfläche (6) mit Lochungen umfassen, und mit einer unteren Kammer (2;3), dadurch gekennzeichnet, daß die untere Kammer (2;3) einen zur Durchströmung des die Wirbel- bzw. Sprudelschicht fluidisierenden Gases bestimmten ersten Raum (2) und einen der Behandlung des Materials dienenden zweiten Raum (3) umfaßt, in den vorzugsweise der Auslauf (5) einmündet, wobei die obere Kammer (1) und die untere Kammer (2;3) über die Belüftungsfläche (6) miteinander verbunden sind, und daß vorzugsweise der Zulauf (15) in bezug auf eine durch die Mittelachse des Behandlungsturmes und den Auslauf (5) gelegte Ebene versetzt ist.

2. Behandlungsturm nach Anspruch 1, dadurch gekennzeichnet, daß die Summe der Lochflächen in der Belüftungsfläche (6) pro Flächeneinheit vom Zulauf (15) zum Auslauf (5) hin abnimmt.

3. Behandlungsturm nach Anspruch 1 oder 2, dadurch gekennzeichnet, daß wenigstens eines der folgenden Merkmale vorgesehen ist:
    a) die Anzahl der Lochungen pro Flächeneinheit in der - insbesondere ringförmigen - Belüftungsfläche (6) nimmt vom Bereich des Zulaufs (15) in Richtung gegen den Auslauf (5) hin ab, wobei bevorzugt die Lochfläche der einzelnen Lochungen jeweils gleich groß ist;
    b) die Abnahme der Lochflächen erfolgt in Stufen, wobei stufenweise die Lochflächengröße jeweils gleich ist;
    c) die Abnahme der Lochflächen erfolgt gegen den Auslauf hin verlangsamt, wobei im Bereich des Zulaufs (15) die Abnahme in kürzerem Abstand erfolgt, als gegen den Auslauf hin.

4. Behandlungsturm nach einem der vorherhegehenden Ansprüche, mit einer ringförmigen Belüftungsfläche (6), dadurch gekennzeichnet, daß der Innendurchmesser der ringförmigen Belüftungsfläche (6) von einem über wenigstens annähernd die gesamte Betriebshöhe der oberen Kammer (1) konzentrisch verlaufenden Verdrängungskörper (4) mit wenigstens im unteren Bereich nach oben abnehmendem Querschnitt, vorzugsweise durch einen bis zur Spitze durchgehenden Konus, abgeschlossen ist, und daß zwischen der äußeren Wand der oberen Kammer (1) und dem Verdrängungskörper (4) eine Trennwand (29) angeordnet ist, wobei auf einer Seite der Trennwand (29) der Zulauf (15) und auf deren anderen Seite der Auslauf (5) vorgesehen ist.

5. Behandlungsturm nach Anspruch 4, dadurch gekennzeichnet, daß der Auslauf (5) radial innen in der oberen Kammer (1) vorgesehen und vorzugsweise als Aussparung des Verdrängerkörpers (4) in der Nähe der ringförmigen Belüftungsfläche (6) gestaltet ist, wobei die Aussparung insbesondere am unteren Rande des Verdrängerkörpers (4) vorgesehen ist.

6. Behandlungsturm nach einem der vorhergehenden Ansprüche, dadurch gekennzeichnet, daß der erste Raum (2) als äußerer ringförmiger Raum und der zweite Raum (3) als innere, vom ersten Raum (2) umgebene Trocknerkammer ausgebildet ist, wobei der erste Raum (2) mit dem Lufteinlaß (24) für die - vorzugsweise ringförmige - Belüftungsfläche (6) der oberen Kammer (1) verbunden ist.

7. Verfahren zum Betreiben eines Behandlungsturmes nach einem der Ansprüche 1 bis 6, insbesondere für Polyestergranulat, dadurch gekennzeichnet, daß das Granulat in einem ersten Verfahrensschritt in einer Sprudelschicht kristallisiert und in einem unmittelbar daran angeschlossenen zweiten Verfahrensschritt in einer gasdurchströmten Schüttung getrocknet wird.

8. Verfahren nach Anspruch 7, dadurch gekennzeichnet, daß wenigstens eine der folgenden Bedingungen eingehalten wird:
   a) die Kristallisation erfolgt in weniger als 3 Minuten zu individuellen Granulatteilchen;
   b) das Gas weist beim Eintritt in die Sprudelschicht eine Temperatur von 150 - 190 °C auf;
   c) die Sprudelschicht wird mittels, insbesondere über eine Ringscheibe (6) geführtem, Inertgas oder vorgetrockneter Luft erzeugt.

9. Verfahren nach Anspruch 7 oder 8, dadurch gekennzeichnet, daß das Granulat isotherm durch die Schüttung geführt wird, wobei vorzugsweise im Bereiche des Auslaufes (5) annähernd die gleiche Temperatur wie in der Schüttung herrscht.

Fig.1

Fig.2

Fig. 3